Europäisches Patentamt

European Patent Office

Office européen des brevets

(11) Publication number: **0 146 624**
**B1**

# EUROPEAN PATENT SPECIFICATION

(45) Date of publication of patent specification: **15.03.89**

(51) Int. Cl.⁴: **F 02 C 7/20**

(21) Application number: **84902846.9**

(22) Date of filing: **20.06.84**

(86) International application number:
**PCT/US84/00935**

(87) International publication number:
**WO 85/00199 17.01.85 Gazette 85/02**

(54) **PROCESS OF INTENSIFICATION OF THE THERMOENERGETICAL CYCLE AND AIR JET PROPULSION ENGINES.**

(30) Priority: **20.06.83 US 505658**

(43) Date of publication of application:
**03.07.85 Bulletin 85/27**

(45) Publication of the grant of the patent:
**15.03.89 Bulletin 89/11**

(84) Designated Contracting States:
**AT BE CH DE FR GB LI NL SE**

(56) References cited:
CH-A- 308 992
DE-B-1 231 959
DE-B-1 246 324
DE-B-1 261 357
DE-C- 846 341
FR-A- 924 012
US-A-2 360 130
US-A-2 416 389
US-A-2 647 368
US-A-2 970 807
US-A-3 486 340
US-A-3 600 890
US-A-3 740 949
US-A-3 747 339

(73) Proprietor: **PAUL, Marius A.**
**700 E. Ocean Blvd. No.1801**
**Long Beach, California, USA (US)**

(72) Inventor: **PAUL, Marius A.**
**700 E. Ocean Blvd. No.1801**
**Long Beach, California, USA (US)**

(74) Representative: **Barker, Rosemary Anne et al**
**Barlow, Gillett & Percival 94 Market Street**
**Manchester M1 1PJ (GB)**

(56) References cited:
US-A-3 978 663
US-A-4 054 030
US-A-4 118 145
US-A-4 190 398
US-A-4 242 045

**Description**

This invention concerns a method of increasing the efficiency and output of a gas-turbine which has turbine blades with internal passages for cooling the blades by supplying the internal passages with a cooling fluid and which has a combustion chamber for combustion of fuel with the combustion gases driving the turbine blades. A gas-turbine of this type is disclosed in U.S. specification No. 2,647,368.

The object of the invention is to provide a gas-turbine engine which is capable of operating at high pressures and temperatures utilising the total expansion of the generated gases without the size, weight and complexity customarily associated with such engines, and without the need to use exotic materials, such as ceramics.

The present invention provides a method of increasing the efficiency and output of a gas-turbine of the type mentioned in the first paragraph hereto, said method being characterised by arranging the combustion chamber annularly around the turbine blades, cooling the gas-turbine blades with a mixture of air and liquid-fuel introduced internally into the blades, wherein the liquid-fuel vaporizes to form an air-fuel mixture, expelling the air-fuel vapour mixture directly from the blades into the annular combustion chamber for turbulent mixing and combustion, combusting the air-fuel vapour mixture in the combustion chamber and directing the gases of combustion at the same turbine blades to drive the gas-turbine.

This invention puts an end to the above difficulties because it assures the cooling of the blades of the gas-turbines and of all the hot surfaces by fluids and air in an open recuperative circuit, allowing the increased cooling at a thermodynamic (stoichiometric) maximum of the temperature of the burnt-gases, which pass through the turbine.

The cooling fluids together with the air form rich mixtures with great convective capacity in the cooling system. The cooling fluids may be constituted of petroleum-fuels or of liquified gases, such as liquid hydrogen or liquid methane, or of methanol. In this respect, the possible use of non-petroleum fuels in the method of the invention is advantageous in adapting the use of the gas turbine to the world energy situation.

Preferably, the turbine blades extend radially from a disk and some quantity of the cooling fluid (liquid fuel) is bi-laterally injected onto the turbine disk, where a film coating is produced which is centrifuged toward the turbine-blades gases. The interior and exterior of the blades are cooled by introduction of the cooling fuel from the film coating together with air into the internal channels in the blades where the cooling fuel vaporizes, thus providing convective evaporative cooling. The resultant air-fuel vapour mixture is then centrifugally and tangentially expelled into the combustion chamber.

Preferably another quantity of the cooling fluid (liquid fuel) is injected into the interior of the stator-blades, then evaporated, mixed and emulsified with the cooling air and is introduced into the chamber of turbulent combustion, where it is associated with the mixture of air and fuel delivered by the turbine-rotor.

Introduction of the rich mixture, which cooled the turbine-blades, into the annular combustion chamber, located around the turbine, enables recovery of the heat absorbed in the air used for cooling.

The combustion chamber, located at the periphery of the turbine and around it, creates a turbo-recuperative space, where the rich mixture made up of the combustible cooling fluids emulsified with air is expelled with the peripheral speed of the turbine-rotor such as 400m/sec. This assures a high level of peripheral turbulence and results in a final stoichiometric mixture of maximal quality.

The combustion chamber of the gas-turbine is supplied with fuel from a direct source by individual injectors and also with the emulsion of air and fuel which cooled the turbine.

The recirculation of the cooling air to the combustion chamber has a recuperative effect and the utilization of the same air for combustion eliminates the previous quantitative restriction on cooling-air.

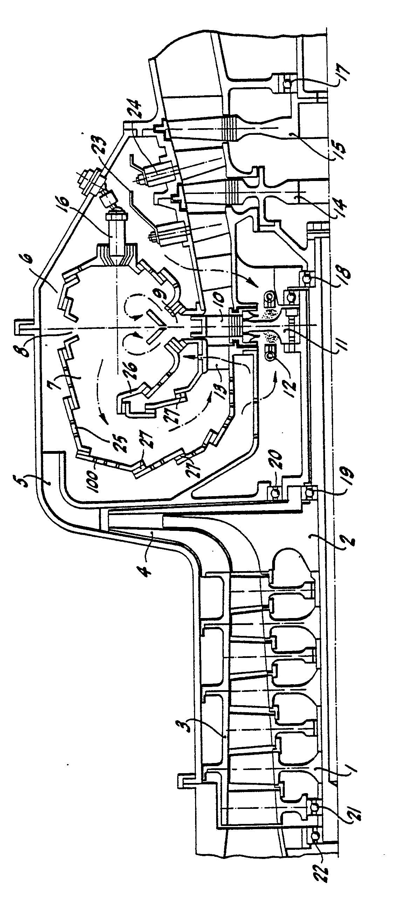

In the accompanying drawing the single figure is a radial section of a preferred embodiment of turbo-engine employing the method of the invention.

The turbo-engine shown in the drawing is made up of a gas-turbine including an interior compressor-rotor 1, with axial blades, associated with an interior radial compressor-rotor 2, having interposed an exterior compressor-rotor 3, with axial blades, and an exterior radial compressor-rotor 4. An air-duct 5 leads the compressed-air to an air-housing 6, which contains an annular peripheral combustion-chamber 7 provided with exterior meridian air-ports 8 and with interior meridian air-ports 9. A turbine-rotor 10, is provided with blades with conventional air-cooling ducts. The blades are mounted on a turbine-disk 11 and are cooled by liquid-injectors 12. A second stage gas-turbine rotor 14 actuates the interior axial and radial compressors 1, 2, while the turbine 10 actuates the exterior axial and radial compressors 3, 4. A further turbine 15 is the final stage of using the energy.

The combustion chamber 7 is provided with primary fuel injectors 16. The entire rotary-assembly is supported via bearings 17, 18, 19, 20, 21, 22. Stator blades 23 and 24 of final turbines 14 and 15 are adjustable for optimizing the speed-regime. The walls 25 and 26 of the combustion-chamber 7 are manufactured with perforations 100, which allow inlet of air over the whole metal surface of the combustion-chamber 7, and include supplementary air inlets 27, disposed for assuring high quality combustion.

The operation of the gas-turbine, according to the invention and to the drawing is assured by counter-rotary driving of the interior compressor 1, with axial blades, and of the interior compressor with radial blades 2 and by driving of the exterior axial compressor 3 and of the exterior radial compressor 4, which pumps the air up through the duct 5 into the air-housing 6, which contains the annular chamber 7. Combustion is assured by injecting primary fuel through the injectors 16 and this allows the start of the gas-turbine and its working at reduced power. At high power, cooling of the blades becomes necessary when the burnt gases surpass 1000-1200°C. The injectors 12 then inject cooling liquid-fuel which settles on the turbine-disk 11 in film form, radially penetrates into the interior channels of the blades of the rotor 10 and together with the cooling-air forms an emulsion having a high capacity for absorption of heat from the blade walls. The fuel vapour from the cooling-liquid and the air that passes through the interior channels of the blades of the turbines 10, are expelled radially and tangentially into the annular, peripheral combustion-chamber 7, where, by final mixing, they completely burn at a level of stoichiometric limit. The whole flow passage of the burnt gases is manufactured of perforated sheet with micro-orifices on the whole surface. This allows air perspiration, which eliminates material contact between the metal-walls and the burnt-gases.

## Claims

1. A method of increasing the efficiency and output of a gas-turbine which has turbine blades (10) with internal passages for cooling the blades by supplying the internal passages with a cooling fluid and which has a combustion chamber (7) for combustion of fuel with the combustion gases driving the turbine blades (10), characterised by arranging the combustion chamber (7) annularly around the turbine blades (10), cooling the gas-turbine blades (10) with a mixture of air and liquid-fuel introduced internally into the blades, wherein the liquid-fuel vaporizes to form an air-fuel mixture, expelling the air-fuel vapour mixture directly from the blades (10) into the annular combustion chamber (7) for turbulent mixing and combustion, combusting the air-fuel vapour mixture in the combustion chamber (7) and directing the gases of combustion at the same turbine blades (10) to drive the gas-turbine.

2. A method as claimed in claim 1 wherein the blades (10) extend radially from a disk (11), further characterised by injecting the liquid fuel onto the turbine disk (11) to provide a film coating which is centrifuged toward the blades (10), cooling the interior and exterior of the blades with the cooling fuel by introducing the cooling fuel from the film coating together with air into the internal channels in the blades where the cooling fuel vaporizes into an air-fuel vapour mixture, and radially and tangentially expelling the air-fuel vapour mixture from the blades directly into the combustion chamber whereby the heat absorbed during cooling is introduced into the combustion chamber.

3. A method as claimed in claim 1 or 2 including introducing additional air into the combustion chamber (7) at a plurality of locations (8) around the outer periphery of the chamber.

4. A method as claimed in claim 1, 2 or 3 including mixing the expelled air-fuel vapour mixture with additional air and fuel supplied to the combustion chamber (7) to achieve stoichiometric combustion.

5. A method as claimed in any preceding claim wherein the combustion chamber (7) has chamber walls (25, 26) directing the exhaust of the combustion to the blades (10) of the gas-turbine.

6. A method as claimed in claim 5 wherein the chamber walls have perforations (100) enabling cooling of the walls by introduction of air through the perforations.

7. A method as claimed in any preceding claim wherein the gas-turbine has a cooperating compressor (1, 3) and further including supplying the air introduced internally in the blades (10) under pressure from the compressor (1, 3).

8. A method as claimed in any preceding claim wherein the liquid-fuel is a gas at ambient temperatures and pressures, the gas being liquified by pressure and/or reduced temperature.

9. A method as claimed in any preceding claim wherein the liquid-fuel is hydrogen.

10. A method as claimed in any of claims 1 to 8 wherein the liquid-fuel is methane.

11. A method as claimed in any of claims 1 to 7 wherein the liquid-fuel is methanol.

## Patentansprüche

1. Verfahren zur Erhöhung der Effizienz und Leistungsabgabe einer Gasturbine, die Turbinenschaufeln (10) mit inneren Kanälen zur Kühlung der Schaufeln aufweist, indem den inneren Kanälen eine Kühlflüssigkeit zugeführt wird, und die eine Brennkammer (7) für die Verbrennung von Kraftstoff aufweist, wobei die Verbrennungsgase die Turbinenschaufeln (10) antreiben, gekennzeichnet durch die Anordnung der Brennkammer (7) ringförmig um die Turbinenschaufeln (10), das Kühlen der Gasturbinenschaufeln (10) mit einem innen in die Schaufeln eingeführten Gemisch aus Luft und Flüssigkraftstoff, wobei der Flüssigkraftstoff verdampft, um ein Luft-Kraftstoff-Gemisch zu bilden, das Austreiben des Luft-Kraftstoffdampfgemischs zur turbulenten Vermischung und Verbrennung direkt von den Schaufeln (10) aus in die ringförmige Brennkammer, die Verbrennung des Luft-Kraftstoffdampfgemischs in der Brennkammer und das Beaufschlagen derselben Turbinenschaufeln (10) mit den Verbrennungsgasen zum Antrieb der Gasturbine.

2. Verfahren nach Anspruch 1 unter Verwendung von Schaufeln (10), die radial von einer Scheibe (11) ausgehen, und weiter gekennzeichnet durch das Einspritzen des Flüssigkraftstoffs auf die Turbinenscheibe (11), um eine Filmbeschichtung zu bilden, die gegen die Schaufeln (10) geschleudert wird, wobei die Innenseite und die Außenseite der der Schaufeln mit dem Kühlkraftstoff gekühlt werden, indem der Kühlkraftstoff von der Filmbeschichtung zusammen mit Luft in die inneren Kanäle in den Schaufeln eingeführt wird, wo der Kühlkraftstoff in ein Luft-Kraftstoffdampfgemisch verdampft, und wobei der radiale und tangentiale Ausstoß des Luft-Kraftstoffdampfgemischs von den Schaufeln direkt in die Brennkammer erfolgt, wodurch die während der Kühlens absorbierte Wärme in die Brennkammer eingeführt wird.

3. Verfahren nach Anspruch 1 oder 2, einschließend das Einblasen von zusätzlicher Luft in die Brennkammer (7) an einer Vielzahl von Stellen (8) rund um den Außenumfang der Kammer.

4. Verfahren nach Anspruch 1, 2 oder 3, einschließend das Mischen des emittierten Luft-Kraftstoffdampfgemischs mit zusätzlicher Luft und Kraftstoff zur Beaufschlagung der Brennkammer, um eine stöchiometrische Verbrennung zu erzielen.

5. Verfahren nach irgendeinem der vorstehenden Ansprüche, wobei die Brennkammer (7) den Ausstoß der Verbrennung auf die Schaufeln (10) der Gasturbine lenkende Kammerwände (25, 26) aufweist.

6. Verfahren nach Anspruch 5, wobei die Kammerwände Perforationen (100) aufweisen, die ein Kühlen der Wände durch Einblasen von Luft durch die Perforationen ermöglichen.

7. Verfahren nach irgendeinem der vorstehenden Ansprüche, wobei die Gasturbine einen zusammenwirkenden Verdichter (1, 3) aufweist, und weiterhin einschließend das Zuführen der nach innen in die Schaufeln (10) eingeblasenen Luft unter Druck vom Verdichter (1, 3).

8. Verfahren nach irgendeinem der vorstehenden Ansprüche, wobei der Flüssigkraftstoff bei Umgebungstemperaturen und -drücken ein Gas ist, das durch Druck und/oder abgesenkte Temperatur verflüssigt wird.

9. Verfahren nach irgendeinem der vorstehenden Ansprüche, wobei als Flüssigkraftstoff Wasserstoff verwendet wird.

10. Verfahren nach einem der Ansprüche 1 bis 8, wobei als Flüssigkraftstoff Methan verwendet wird.

11. Verfahren nach einem der Ansprüche 1 bis 7, wobei als Flüssigkraftstoff Methanol verwendet wird.

**Revendications**

1. Méthode pour augmenter l'efficacité et le débit d'une turbine à gaz munie d'aubes de turbine (10) à passages internes pour le refroidissement des aubes par amenée d'un fluide de refroidissement dans les passages intérieures et possèdant une chambre de combustion (7) pour la combustion de carburant, les gaz de combustion entraînant les aubes de turbine (10), caractérisé par le fait qu'on dispose la chambre de combustion (7) annulairement autour des aubes de turbine (10), on refroidit les aubes de turbine à gaz (10) avec un mélange d'air et de carburant liquide introduit intérieurement dans les aubes, le carburant liquide se vaporisant sous forme d'un mélange air-carburant, on refoule le mélange vapeur air-carburant directement des aubes (10) dans la chambre de combustion annulaire (7) par mélange turbulent et combustion, on fait brûler le mélange vapeur air-carburant dans la chambre de combustion (7) et on dirige les gaz de combustion sur les mêmes aubes de turbine (10) pour entraîner la turbine à gaz.

2. Méthode selon la revendication 1, dans laquelle les aubes (10) s'étendent radialement d'un disque (11), caractérisée en outre par le fait que l'on injecte le carburant liquide sur le disque de turbine (11) pour obtenir une couche de revêtement qui est centrifugée vers les aubes (10), on refroidit l'intérieur et l'extérieur des aubes avec le carburant de refroidissement en l'introduisant depuis la couche de revêtement avec de l'air dans les canaux internes des aubes où le carburant de refroidissement se vaporise en mélange vapeur air-carburant et on refoule radialement et tangentiellement le mélange vapeur air-carburant des aubes directement dans la chambre de combustion, la chaleur absorbée pendant le refroidissement étant ainsi introduite dans la chambre de combustion.

3. Méthode selon la revendication 1 ou 2, dans laquelle on introduit de l'air additionnel dans la chambre de combustion (7) en une pluralité de points (8) autour de la périphérie extérieure de la chambre.

4. Méthode selon la revendication 1, 2 ou 3, dans laquelle on mélange le mélange vapeur air-carburant refoulée avec de l'air additionnel et du carburant fournie à la chambre de combustion (7) pour obtenir une combustion stoechiométrique.

5. Méthode selon l'une des revendications précédentes, dans laquelle la chambre de combustion (7) possède des parois de chambre (25, 26) dirigeant l'échappement de la combustion sur les aubes (10) de la turbine à gaz.

6. Méthode selon la revendication 5, dans laquelle les parois de chambre présentent des trous (100) permettant le refroidissement des parois par introduction d'air à travers les trous.

7. Méthode selon l'une des revendications précédentes, dans laquelle la turbine à gaz possède un compresseur (1, 3) associé et dans laquelle, en outre, on fournit de l'air introduit à l'intérieur des aubes (10) sous pression provenant du compresseur (1, 3).

8. Méthode selon l'une des revendications précédentes, dans laquelle le carburant liquide est un gaz aux températures et pressions ambiantes, le gaz se liquéfiant par pression et/ou température réduite.

9. Méthode selon l'une des revendications précédentes, dans laquelle le carburant liquide est l'hydrogène.

10. Méthode selon l'une des revendications 1 à 8, dans laquelle le carburant liquide est le méthane.

11. Méthode selon l'une des revendications 1 à 8, dans laquelle le carburant liquide est le méthanol.

EP  0 146 624  B1

1